(19) Europäisches Patentamt
European Patent Office
Office européen des brevets

(11) **EP 3 863 222 A1**

(12) **EUROPEAN PATENT APPLICATION**
published in accordance with Art. 153(4) EPC

(43) Date of publication:
**11.08.2021 Bulletin 2021/32**

(21) Application number: **18937140.4**

(22) Date of filing: **31.10.2018**

(51) Int Cl.:
***H04L 12/24*** *(2006.01)*

(86) International application number:
**PCT/CN2018/113031**

(87) International publication number:
**WO 2020/077682 (23.04.2020 Gazette 2020/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.10.2018 CN 201811210366**

(71) Applicant: **Wangsu Science & Technology Co., Ltd.**
**Shanghai 201800 (CN)**

(72) Inventors:
• YE, Tangzhi
  Shanghai 201800 (CN)
• HUANG, Huajunjie
  Shanghai 201800 (CN)

(74) Representative: De Arpe Tejero, Manuel
Arpe Patentes y Marcas
Alcalá, 26, 5ª Planta
28014 Madrid (ES)

(54) **SERVICE QUALITY EVALUATION MODEL TRAINING METHOD AND DEVICE**

(57) The present disclosure discloses a training method and an apparatus for service quality evaluation models. The method includes: collecting the machine performance data, the network characteristic data, and the quality monitoring data of the service nodes according to a fixed cycle; determining a characteristic value based on the machine performance data and the network characteristic data; determining a tag based on the quality monitoring data; building a training set using the characteristic value and the tag; and training a deep neural network model using the training set to obtain a service quality evaluation model. Using the service quality evaluation model provided by the present disclosure to perform service quality evaluation may improve the accuracy of the evaluation and reduce the data input, and thus may greatly reduce the computing resources and bandwidth required for the evaluation. Therefore, not only the efficiency of the service quality evaluation is improved, but also the operating costs is reduced.

FIG. 3

**Description**

FIELD OF THE DISCLOSURE

The present disclosure relates to the field of content delivery network technology and, more particularly, relates to a training method and an apparatus for service quality evaluation models.

BACKGROUND

With the content delivery network (CDN) technology becoming increasing popular, CDN services are more and more complex and large, and customers have more and more demands on the service quality of CDN service systems. In order to ensure high-quality services, the CDN service systems need to know the quality of the service provided to customers in real time, find and replace faulty nodes in time, and avoid the degradation of service quality caused by machine or network reasons.

Currently, one way to evaluate the service quality of a CDN service system is to evaluate the service quality by analyzing the access logs of the server, e.g., calculating indicators such as stuck and pause rate, etc. When the service quality is evaluated through the access logs of the server, a large amount of computing resources are required to traverse the access logs, causing the equipment and bandwidth costs for internal operation and maintenance to be very high. At the same time, this method is substantially coupled with the service type, and the evaluation indicator for each service type may vary significantly, and it is impossible to set a unified standard, which makes internal management very difficult. Another way is to use the performance of the machine and network conditions to evaluate the service quality. This evaluation method relies heavily on the experience of the operation and maintenance personnel, and the accuracy is not high.

BRIEF SUMMARY OF THE DISCLOSURE

In order to solve the problems in the prior art, embodiments of the present disclosure provide a training method and an apparatus for service quality evaluation models. The technical solution is as follows.

In a first aspect, a training method for service quality evaluation models is provided, and the method is applied to a model training node and includes:

collecting machine performance data, network characteristic data, and quality monitoring data of a service node according to a fixed cycle;
determining a characteristic value based on the machine performance data and the network characteristic data;
determining a tag based on the quality monitoring data;
building a training set using the characteristic value and the tag; and
training a deep neural network model using the training set to obtain a service quality evaluation model.

Optionally, each of the service quality evaluation models is applicable to a quality evaluation of a service type; and
correspondingly, collecting the quality monitoring data of the service node according to the fixed cycle includes:
collecting the quality monitoring data corresponding to one or more types of application services in the service node according to the fixed cycle, the one or more types of application services belonging to a service type to which the service quality evaluation model is applicable.

Optionally, the machine performance data include a central processing unit (CPU) utilization rate, a memory remaining amount, a load, an iowait value, and an ioutil value; and the network characteristic data include ping data, poll data, and a downloading rate.

Optionally, the method further includes:

the monitoring node periodically sending a detection signal to the service node, and obtaining the network characteristic data; and
correspondingly, the step of collecting the network characteristic data of the service node according to the fixed cycle includes:
collecting the network characteristic data of the service node from the monitoring node according to the fixed cycle.

Optionally, prior to determining the characteristic value based on the machine performance data and the network characteristic data, the method includes:

deleting data that have duplicate time stamps in the machine performance data, the characteristic feature data, and the quality monitoring data; and
replacing null values and abnormal values in the machine performance data, the characteristic feature data, and the quality monitoring data with normal values, or deleting the null values and the abnormal values.

Optionally, the step of replacing the abnormal values in the machine performance data, the characteristic feature data, and the quality monitoring data with normal values includes:

filtering the null values and the abnormal values in the machine performance data, the characteristic feature data, and the quality monitoring data in a manner to set a confidence interval after using a clustering algorithm or standardizing the data; and
replacing the abnormal values with data collected using a k-NN algorithm or collected in an adjacent collection cycle.

Optionally, the characteristic value of the machine performance data includes one or more of a mean value, a maximum value, or a variance of the machine performance data of all dimensions; and
the characteristic value of the network characteristic data includes at least one preset quantile value of the network characteristic data of all dimensions.

Optionally, the step of determining the tag based on the quality monitoring data includes:

> determining an evaluation indicator of service quality based on the service type to which the service quality evaluation model is applicable; and
> calculating a value of the evaluation indicator using the quality monitoring data, and determining the value of the evaluation indicator as a tag.

Optionally, the deep neural network model is a long short-term memory (LSTM) neural network model.

Optionally, the LSTM neural network model includes at least one layer of neural network. Each layer of neural network includes a forget gate, an input gate, an output gate, a neuron state, and an output result, each having a formula respectively:

$$f_t = \sigma_g(W_f x_t + U_f c_{t-1} + b_f);$$

$$i_t = \sigma_g(W_i x_t + U_i c_{t-1} + b_i);$$

$$o_t = \sigma_g(W_0 x_t + U_o c_{t-1} + b_o);$$

$$c_t = f_t \circ c_{t-1} + i_t \circ \sigma_c(W_c x_t + b_c);$$

$$h_t = o_t \circ \sigma_h(c_t);$$

where $f_t$ represents the forget gate; $i_t$ represents the input gate; $o_t$ represents the output gate; $c_t$ represents the neuron state; $h_t$ represents the output result; each of $\sigma_g$, $\sigma_c$, and $\sigma_h$ represents an activation function; $x_t$ represents the input data at time t; each of $W_f$, $W_i$, $W_o$, $W_c$, $U_f$, $U_i$, and $U_o$ represents a weight matrix, each of $b_f$, $b_i$, $b_o$, and $b_c$ represents an offset vector.

Optionally, when the LSTM neural network model includes multiple layers of neural network, the settings of a same parameter in different layers of the neural network are different.

Optionally, when the LSTM neural network model includes multiple layers of neural network, the step of training the LSTM neural network model using the training set includes:

> inputting the characteristic value of the training set into the first layer of neural network in the LSTM neural network model for propagation, and obtaining an output result;
inputting the currently-obtained output result into the next layer of neural network for propagation, and obtaining a new output result; when the next layer of neural network is the last layer of neural network, terminating the step, otherwise repeating the step;
determining an error between the output result of the last layer of neural network and the tag; and
reversely propagating the error to optimize the model parameters.

Optionally, the training set includes a plurality of training samples, and each of the plurality of training samples includes a tag and a characteristic value of *n* time steps, where *n* is a positive integer; and
the step of inputting the characteristic value of the training set into the first layer of neural network in the LSTM neural network model for propagation, and obtaining the output result includes:
sequentially inputting $x_t$ (t = 1, 2, ... , *n*) into the first layer of neural network in the LSTM neural network model with $x_t$ a matrix formed by the characteristic value of the tth time step in all training samples included in the training set, and obtaining an output result $h_n$.

Optionally, the method further includes building a verification set using the characteristic value and the tag; and
after the step of training the deep neural network model using the training set, the method includes:

> importing a characteristic value of the verification set into a trained model to obtain an output result;
> determining an error between the output result and a tag of the verification set; and
> when the error does not meet the requirements, adjusting hyperparamters and retraining the adjusted model.

Optionally, the relationship between the input and the output results established by the service quality evaluation model is a nonlinear relationship.

Optionally, the model training node is a single server or a server group.

In a second aspect, a training apparatus for service quality evaluation models is provided, and the apparatus includes:

> a collection module, configured to collect machine performance data, network characteristic data, and quality monitoring data of a service node according to a fixed cycle;
> a processing module, configured to determine a characteristic value based on the machine performance data and the network characteristic data;
> the processing module; further configured to determine a tag based on the quality monitoring data;
> the processing module, further configured to build a training set using the characteristic value and the tag; and

a training module, configured to train a deep neural network model using the training set to obtain a service quality evaluation model.

Optionally, each of the service quality evaluation models is applicable to a quality evaluation of a service type; and

the collection module is specifically configured to:

collect the quality monitoring data corresponding to one or more types of application services in the service node according to the fixed cycle, the one or more types of application services belonging to a service type to which the service quality evaluation model is applicable.

Optionally, the machine performance data include a CPU utilization rate, a memory remaining amount, a load, an iowait value, and an ioutil value; and the network characteristic data include ping data, poll data, and a downloading rate.

Optionally, the collection module is specifically configured to:

collect the network characteristic data of the service node from the monitoring node according to the fixed cycle.

Optionally, the processing module is further configured to:

delete data that have duplicate time stamps in the machine performance data, the characteristic feature data, and the quality monitoring data; and

replace null values and abnormal values in the machine performance data, the characteristic feature data, and the quality monitoring data with normal values, or delete the null values and the abnormal values.

Optionally, the processing module is specifically configured to:

filter the null values and the abnormal values in the machine performance data, the characteristic feature data, and the quality monitoring data in a manner to set a confidence interval after using a clustering algorithm or standardizing the data; and

replace the abnormal values with data collected using a k-NN algorithm or collected in an adjacent collection cycle.

Optionally, the characteristic value of the machine performance data includes one or more of a mean value, a maximum value, or a variance of the machine performance data of all dimensions; and

the characteristic value of the network characteristic data includes at least one preset quantile value of the network characteristic data of all dimensions.

Optionally, the processing module is specifically configured to:

determine an evaluation indicator of service quality based on the service type to which the service quality evaluation model is applicable; and

calculate a value of the evaluation indicator using the quality monitoring data, and determining the value of the evaluation indicator as a tag.

Optionally, the deep neural network model is an LSTM neural network model.

Optionally, the LSTM neural network model includes at least one layer of neural network. Each layer of neural network includes a forget gate, an input gate, an output gate, a neuron state, and an output result, each having a formula respectively:

$$ f_t = \sigma_g(W_f x_t + U_f c_{t-1} + b_f); $$

$$ i_t = \sigma_g(W_i x_t + U_i c_{t-1} + b_i); $$

$$ o_t = \sigma_g(W_0 x_t + U_o c_{t-1} + b_o); $$

$$ c_t = f_t \circ c_{t-1} + i_t \circ \sigma_c(W_c x_t + b_c); $$

$$ h_t = o_t \circ \sigma_h(c_t); $$

where $f_t$ represents the forget gate; $i_t$ represents the input gate; $o_t$ represents the output gate; $c_t$ represents the neuron state; $h_t$ represents the output result; each of $\sigma_g$, $\sigma_c$, and $\sigma_h$ represents an activation function; $x_t$ represents the input data at time t; each of $W_f$, $W_i$, $W_o$, $W_c$, $U_f$, $U_i$, and $U_o$ represents a weight matrix, each of $b_f$, $b_i$, $b_o$, and $b_c$ represents an offset vector.

Optionally, when the LSTM neural network model includes multiple layers of neural network, the settings of a same parameter in different layers of the neural network are different.

Optionally, when the LSTM neural network model includes multiple layers of neural network, the training module is specifically configured to:

input the characteristic value of the training set into the first layer of neural network in the LSTM neural network model for propagation, and obtain an output result;

input the currently-obtained output result into the next layer of neural network for propagation, and obtain a new output result; when the next layer of neural network is the last layer of neural network, terminate the step, otherwise repeat the step;

determine an error between the output result of the last layer of neural network and the tag; and

reversely propagate the error to optimize the model parameters.

Optionally, the training set includes a plurality of training samples, and each of the plurality of training samples includes a tag and a characteristic value *of n* time steps, where *n* is a positive integer; and

the training module is specifically configured to:

sequentially input $x_t$ (t = 1, 2, ... , *n*) into the first layer of neural network in the LSTM neural network model with $x_t$ a matrix formed by the characteristic value of the $t^{th}$ time step in all training samples included in the training set, and obtain an output result $h_n$.

The embodiments of the present disclosure has the following beneficial effects.

(1) The embodiments of the present disclosure utilize machine performance data, network characteristic data, and quality monitoring data to train a model to lean a nonlinear relationship between machine performance data, network characteristic data, and service quality. When using the model to evaluate the service quality of a service system, only the machine performance data and the network characteristic data of the service system need to be inputted. Compared with the method of evaluating the service quality through the server access logs, the disclosed method is able to reduce the data input and greatly reduce the computing resources and bandwidth required for evaluation, and thus may not only improve the efficiency of the service quality evaluation, but also reduce the operating costs.

(2) Compared with the method of evaluating the service quality through the server access logs, the embodiments of the present disclosure use machine performance data and network characteristic data as model inputs, and these data are decoupled from specific services, such that a common set of service quality evaluation criteria can be formed, facilitating the management of the service system;

(3) Compared with the method of evaluating the service quality through manual analysis, the embodiments of the present disclosure, without relying on manual experience, are able to automatically build a model with improved accuracy using machine learning methods.

BRIEF DESCRIPTION OF THE DRAWINGS

In order to more clearly illustrate the technical schemes in the embodiments of the present disclosure, the drawings used in the description of the embodiments will be briefly described below. It is obvious that the drawings in the following description are only some embodiments of the present disclosure, and for those of ordinary skill in the art, other drawings may also be obtained from these drawings without paying for any creative effort.

FIG. 1 illustrates a schematic diagram of a network frame according to an embodiment of the present disclosure;

FIG. 2 illustrates a schematic diagram of another network frame according to an embodiment of the present disclosure;

FIG. 3 illustrates a flowchart of a training method of a service quality evaluation model according to an embodiment of the present disclosure;

FIG. 4 illustrates a flowchart of a service quality evaluation method according to an embodiment of the present disclosure;

FIG. 5 illustrates a structural block diagram of a training apparatus for service quality evaluation models according to an embodiment of the present disclosure; and

FIG. 6 illustrates a structural block diagram of a service quality evaluation apparatus according to an embodiment of the present disclosure.

DETAILED DESCRIPTION

In order to make the objects, technical solutions and advantages of the present disclosure clearer, the embodiments of the present disclosure will be further described in detail below with reference to the accompanying drawings.

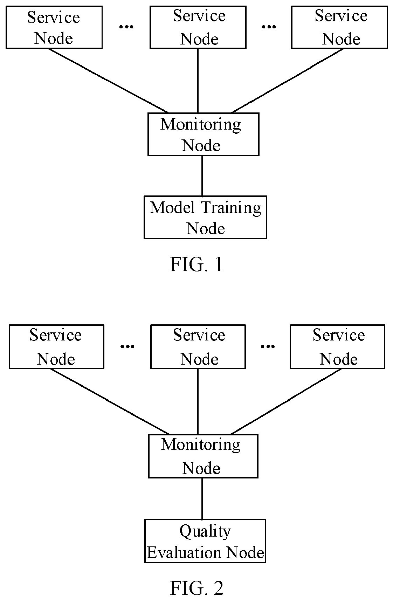

The embodiments of the present disclosure provide a training method for service quality evaluation models. The method may be applicable to the network frame illustrated in FIG. 1. The network frame may include service nodes, monitoring nodes, and a model training node. The service node may be a node in a CDN service system that provides services to users. The monitoring nodes may be connected to the service nodes, and may be configured to detect the network status from the monitoring nodes to each service node and generate network characteristic data by sending a detection signal to the service node. The monitoring nodes may also be used to collect the machine performance data and quality monitoring data in each service node. The model training node may be connected to the monitoring nodes, and may be configured to collect the machine performance data, the network characteristic data, and the quality monitoring data of each service node from the monitoring nodes, and then use the collected data for training to obtain a service quality evaluation model. The monitoring nodes may be one or more. When there are multiple monitoring nodes, each monitoring node may be responsible for monitoring some of the service nodes. The model training node may be a single sever or a server group. The model training node described above may include a processor, a memory, and a transceiver. The processor may be used to perform training of a service quality evaluation model in the following process. The memory may be used to store data required and data generated in the following training process. The transceiver may be used to receive and transmit relevant data in the following training process.

The embodiments of the present disclosure also provide a service quality evaluation method. The method may be applied to the network frame illustrated in FIG. 2. The network frame may include service nodes, monitoring nodes, and a quality evaluation node. The monitoring nodes may be configured to detect the network status from the monitoring nodes to each service node and generate network characteristic data, and may also be configured to collect the machine performance data in each service node. The quality evaluation node may be connected to the monitoring nodes, and may be configured to collect the machine performance data and the network characteristic data of each service node from the monitoring nodes, and then evaluate the service quality of the CDN service system using the collected data and the trained service quality evaluation model. The quality evaluation node may be a single server or a server group. The quality evaluation node described above may include a processor, a memory, and a transceiver. The processor may be used to evaluate the service quality in the following process. The memory may be used to store data required and data generated in the following evaluation process. The transceiver may be used to receive and transmit relevant data in the following evaluation process. The model training node described above and the quality evaluation node may be a same node, or may be different nodes.

It should be noted that, the embodiments of the present disclosure are not only applicable to evaluating the service quality of a CDN service system, but also applicable to evaluating the service quality of a single service node as well as the service quality of other service systems or clusters composed of multiple service nodes. The embodiments of the present disclosure are not intended to specifically limit the application scope of the present disclosure.

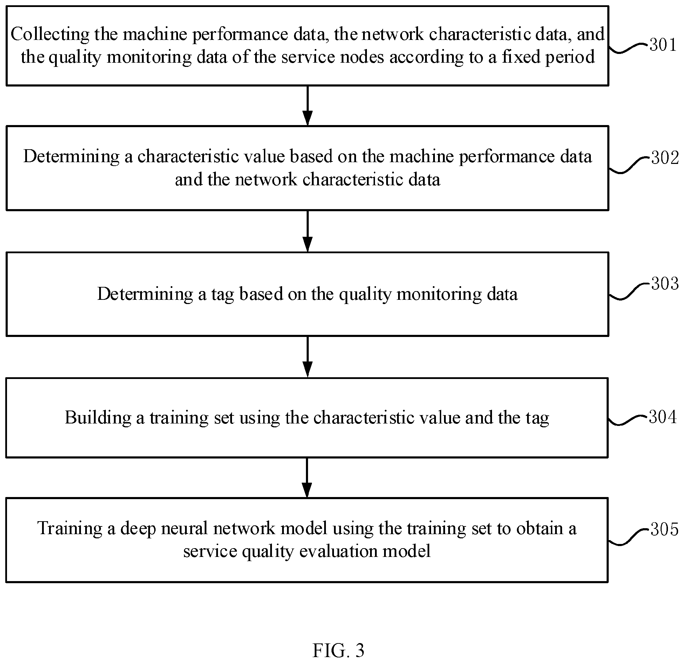

Referring to FIG. 3, a flowchart of a training method of a service quality evaluation model according to an embodiment of the present disclosure is illustrated. The method may be applied to model training nodes. That is, the method may be implemented by the model training node. The method may specifically include the following steps.

In step 301, the machine performance data, the network characteristic data, and the quality monitoring data of the service nodes may be collected according to a fixed cycle.

The process of training the service quality evaluation model may be inputting the characteristic value into the model for training, obtaining the output result, then adjusting the parameters of the model according to the error between the output result and the real result, and further continuing to train the adjusted model. Through such iterative looping, a nonlinear relationship between the input and the output results may be established, that is, a service quality evaluation model may be obtained. In this process, the data used for determining the characteristic value may include machine performance data and network characteristic data. In a specific embodiment, the data used to represent the service quality may also include other data, and the embodiments of the present disclosure do not specifically define the data that are used to represent the service quality. The embodiments of the present disclosure may collect machine performance data, network characteristic data, and quality monitoring data of each service node in the CDN service system according to a fixed cycle. The machine performance data may include a CPU utilization rate, a memory remaining amount, a load, an iowait value, an ioutil value, etc. During the operation of the CDN service system, the monitoring node may periodically send a detection signal to the service node to detect the network status from the monitoring node to each service node and obtain the network characteristic data, such that the network characteristic data of the service node can be collected from the monitoring node. The network characteristic data may include packet internet groper (ping) data, poll data, and a downloading rate, etc.

The machine performance data and the quality monitoring data may need to be obtained from the service node. However, in order to avoid the model training node collecting data directly from the service node, it may be necessary to establish a large-scale connection with the service node in the CDN system. It may be possible to uniformly collect the machine performance data and the quality monitoring data from the service node periodically by the monitoring node, and the model training node may then acquire the machine performance data, the network characteristic data, and the quality monitoring data from the monitoring node according to a fixed cycle. In another embodiment, the service node and the monitoring node may also be able to send the data required for model training to a distributed storage system, and then the model training node may acquire the data from the distributed storage system according to the fixed cycle. The embodiments of the present do not specifically define the method for collecting raw data.

The quality monitoring data may be used to calculate the evaluation indicator of service quality, that is, the real result used for comparison with the model output, and the quality monitoring data may include information such as the request response time and the requested content size, etc. When collecting the quality monitoring data, the corresponding quality monitoring data may be obtained from the log information of the service node.

With the method provided by the embodiments of the present disclosure, the trained service quality evaluation model is applicable to quality evaluation for a service type, and each service type may include multiple application services. Therefore, based on the service type to which the service quality evaluation model is applicable, the quality monitoring data corresponding to the application services of the service type may be selected to perform model training. As such, the embodiments of the present disclosure are able to adopt a general model training method to train a service quality evaluation model that is suitable for various service types. When collecting the quality monitoring data, the quality monitoring data corresponding to one or more types of application services in the service node may be collected, and the one or more types of application services may belong to a service type to which the service quality evaluation model is applicable. That is, the quality monitoring data to be collected may be the quality monitoring data corresponding to limited application services, and it is not necessary to collect the quality monitoring data corresponding to all the application services included in the service type. For example, the service type to which the model to be trained is applicable may be a service type A, and the application services in the service type A may include application service A1, application service A2, ..., application service An. When collecting the quality monitoring data, only the quality monitoring data corresponding to application service A1 may be collected and used for subsequent model training, thereby reducing the data transmission pressure during data collection and the subsequent data processing burden. In a specific embodiment, data in a larger range may also be collected, and then the quality monitoring data corresponding to preset application services in the service node may be obtained from the collected big data set, so as to perform model training using the acquired data.

In one embodiment, the machine performance data, the network characteristic data, and the quality monitoring data of multiple CDN service systems may be collected.

After the raw data are collected, the raw data may need to be preprocessed. The preprocessing process may include: deleting data in the raw data that have duplicate time stamps, filtering null values and abnormal values in the raw data, and replacing the null values and the abnormal values with normal values, or deleting the null values and the abnormal values. The null values may be directly filtered from the raw data; and the abnormal values may be filtered by setting a confidence interval after applying a clustering algorithm or standardizing the data. When performing the replacement, data collected using a k-nearest neighbors (k-NN) algorithm or collected in an adjacent collection cycle may be used for replacement. In the following, examples will be given to illustrate the method of using the data collected in an adjacent collection cycle for replacement. For example, when the CPU utilization rate of node A collected in the current collection cycle is null or abnormal, the CPU utilization rate of node A in the current collection cycle may be replaced with the CPU utilization rate of node A collected in the previous collection cycle.

In one embodiment, the collected raw data may be imported into a kafka queue, such that the raw data can be repeatedly consumed. For example, the raw data may be copied into two copies with one for an offline training model and the other for real-time calculation of the service quality.

In step 302, a characteristic value may be determined based on the machine performance data and the network characteristic data.

In one embodiment, the characteristic value required for model training, that is, the characteristic value associated with the evaluation of the service quality, may be filtered by using a statistical method or by combining the manual experience. In the embodiments of the present disclosure, the characteristic value of the machine performance data may include one or more of a mean value, a maximum value, or a variance of the machine performance data of all dimensions. For example, the characteristic value of the machine performance data may include the average value of the CPU utilization rate, the maximum value, or the variance; the average value, the maximum value, or the variance of the remaining memory; the average value, the maximum value, and the variance of the load; the average value, the maximum value, or the variance of the iowait value; and the average value, the maximum value, and the variance of the ioutil value. The characteristic value of the network characteristic data may include at least one preset quantile value of network characteristic data of all dimensions. For example, the characteristic value of the network characteristic data may include the 25 quantile value, the 50 quantile value, and the 75 quantile value of the ping data, and the 25 quantile value, the 50 quantile value, and the 75 quantile value of the poll data. When calculating each characteristic value, the calculation may be performed according to the granularity of the CDN service system and the granularity of the collection cycle. For example, the average value of the CPU utilization rate may be the average value of the CPU utilization rates of all service nodes collected in the same collection cycle in the same CDN service system.

Specifically, Hive Structural Query Language (Hive SQL) may be used to calculate each characteristic value.

In step 303, a tag may be determined based on the quality monitoring data.

The tag may intuitively reflect the service quality, and for different service types, the indicators used to evaluate service quality may be different. According to the service type to which the service quality evaluation model is applicable, a corresponding evaluation indicator may be used to determine the tag. The step of determining the tag based on the quality monitoring data may include: determining an evaluation indicator of service quality based on the service type to which the service quality evaluation model is applicable, and then calculating the value of the evaluation indicator using the quality monitoring data and determining the value of the evaluation indicator as the tag. For example, for the service quality evaluation model applicable to an on-demand service, the stuck and pause rate may be used as the evaluation indicator, and the stuck and pause rate calculated using the quality monitoring data may be used as a tag for model training. The embodiments of the present disclosure do not specifically limit the evaluation indicators used by the tag during model training.

The collected quality monitoring data may include a large amount of raw data, which cannot intuitively reflect the service quality. Therefore, it may be necessary to go through a series of calculations to obtain the value of the evaluation indicator of service quality, and use the evaluation indicator obtained through the calculation as a tag for performing model training.

In step 304, the characteristic value and the tag may be used to build a training set.

After obtaining the characteristic value and the tag based on the raw data, the characteristic value and the tag may be used to build a training sample. Each of the plurality of training samples may include a characteristic value of $n$ time steps and a corresponding tag, where $n$ is a positive integer, and each training sample may correspond to a tag value. Optionally, prior to calculating the characteristic value and the tag based on the raw data, the raw data may be summarized based on the number of time steps included in the training sample. That is, the raw data collected in the $n$ collection cycles may be summarized together, and the characteristic value of the machine performance data and the network characteristic data obtained in each collection cycle and the tag corresponding to the quality monitoring data obtained in the $n$ collection cycles may be calculated to obtain a training sample including data for $n$ time steps.

A large number of training samples may be obtained using the collected raw data, and the training samples may be divided according to a preset division ratio to build a training set, a verification set, and a test set. For example, the division ratio may be 60%, 20%, and 20%. The training set may be used to train the model; the validation set may be used to validate the trained model and select a model with high accuracy; and the test set may be used to further test and optimize the model selected by the validation set.

In step 305, a service quality evaluation model may be obtained using a deep neural network model trained by the training set.

The deep neural network model may adopt an LSTM neural network model, and the LSTM neural network is a time recurrent neural network. The LSTM neural network model adopted by the embodiments of the present disclosure may include at least one layer of neural network. Each layer of neural network may include a forget gate, an input gate, an output gate, a neuron state, and an output result, each having a formula respectively:

$$f_t = \sigma_g(W_f x_t + U_f c_{t-1} + b_f);$$

$$i_t = \sigma_g(W_i x_t + U_i c_{t-1} + b_i);$$

$$o_t = \sigma_g(W_0 x_t + U_o c_{t-1} + b_o);$$

$$c_t = f_t \circ c_{t-1} + i_t \circ \sigma_c(W_c x_t + b_c);$$

$$h_t = o_t \circ \sigma_h(c_t);$$

where $f_t$ represents the forget gate; $i_t$ represents the input gate; $o_t$ represents the output gate; $c_t$ represents the neuron state; $h_t$ represents the output result; each of $\sigma_g$, $\sigma_c$, and $\sigma_h$ represents an activation function; $x_t$ represents the input data at time t; each of $W_f$, $W_i$, $W_o$, $W_c$, $U_f$, $U_i$, and $U_o$ represents a weight matrix, each of $b_f$, $b_i$, $b_o$, and $b_c$ represents an offset vector. Specifically, $\sigma_g$ may be a Sigmoid function, and $\sigma_c$ and $\sigma_h$ may be tanh functions.

When the LSTM neural network model includes multiple layers of neural network, the settings of a same parameter in different layers of the neural network may be different. For example, the parameter $\sigma_g$ of the first layer may be set differently from the parameter $\sigma_g$ of the second layer. The process of training the multiple-layer LSTM neural network model using the training set may include imputing the characteristic value of the training set into the first layer of the neural network in the LSTM neural network model for propagation and obtaining an output result; inputting the currently-obtained result into the next layer of neural network for propagation and obtaining a new output result; when the next layer of neural network is the last layer of neural network, terminating the step, otherwise repeating the step; determining an error between the output result of the last layer of neural network and the tag; and reversely propagating the error to optimize the model parameters.

Optionally, the embodiments of the present disclosure may adopt an LSTM neural network model with a double-layer structure. In the following, an LSTM neural network model with a double-layer structure is provided as an example to illustrate the training process of the model.

First, the training set may be inputted into the first layer of neural network in the LSTM neural network model for propagation. When inputting the training set, $x_t$ may be the characteristic values in the training set with $t = 1, 2, \ldots , n$, where $n$ is the number of time steps included in each training sample as described above. For example, $n$ may be 10. The value of $n$ may be set based on empirical values, or may be set through self-learning. The value of $n$ is not specifically defined in the embodiments of the present disclosure.

The propagation process of the training set in the first layer of neural network may specifically include sequentially inputting $x_t$ ($t = 1, 2, \ldots , n)$ into the first layer of neural network in the LSTM neural network model with $x_t$ a matrix formed by the characteristic value of the $t^{th}$ time step in all training samples included in the training set, and obtaining an output result $h_n$.

Further, $h_n$ may be inputted as $x_t$ into the second layer of neural network for propagation. The propagation process of $h_n$ in the second layer of neural network may be similar to the propagation process of the training set in the first layer of neural network, and the details are not repeated here. After the propagation of $h_n$ in the second

layer of neural network, service quality data may be outputted, and an error may be calculated based on the outputted service quality data and the tag in the training set. The error may be represented by a loss function, and the error may be inputted into the model for reversed propagation. Moreover, the parameters in the model (including the weight matrices and the offset vectors) may be partially differentiated, and the parameters may be adjusted according to the values obtained by the partial differentiation to optimize the model.

In one embodiment, the training samples may also be model-trained in batches. Each batch of training samples may construct a training set, and training may be performed according to the method described above, such that the model parameters may be updated. For example, a first batch of training samples may be used to perform training and update the model parameters. Then, a second batch of training samples may be continuously used to perform training and update the model parameters. Different batches of training samples may be sequentially inputted to perform training until the end of the training using the last batch of training samples.

After training a model using the training set, the verification set may be used to verify the accuracy of the trained model, that is, to calculate the error between the model output result and the real result, i.e., the tag. When the requirements are not satisfied, i.e., the accuracy is not enough, the hyperparamters may be adjusted, and the adjusted model may be retrained. Through such iterative looping, a model with high accuracy may be selected. Further, the test set may also be used to further test and optimize the model selected through the verification set. That is, the error between the model output result and the real result may be calculated, and then the loss function may be reversely propagated to optimize the model parameters.

The model training node may be a single server or a server group. When the model training node is a single server, the above training process may be entirely performed by the single server. When the data processing amount of the above training process is large, the training process may be performed by a server group. Optionally, the model training node may include a bigdata node and a deep-learning node. The big-data node may be used to preprocess the collected raw data and build the training set using the raw data. The deep-learning node may be used to train the model with the training set to obtain a service quality evaluation model. The bigdata node and the deep-learning node may be a single server or a server group. In one embodiment, a Hadoop distributed file system may be used to store the training set. The deep-learning node may read the training set from the Hadoop distributed file system to perform model training. Specifically, a Tensorflow training model may be adopted.

The embodiments of the present disclosure has the following beneficial effects.

(1) The embodiments of the present disclosure utilize machine performance data, network characteristic data, and quality monitoring data to train a model to learn a nonlinear relationship between machine performance data, network characteristic data, and service quality. When using the model to evaluate the service quality of a service system, only the machine performance data and the network characteristic data of the service system need to be inputted. Compared with the method of evaluating the service quality through the server access logs, the disclosed method is able to reduce the data input and greatly reduce the computing resources and bandwidth required for evaluation, and thus may not only improve the efficiency of the service quality evaluation, but also reduce the operating costs.

(2) Compared with the method of evaluating the service quality through the server access logs, the embodiments of the present disclosure use machine performance data and network characteristic data as model inputs, and these data are decoupled from specific services, such that a common set of service quality evaluation criteria can be formed, facilitating the management of the service system;

(3) Compared with the method of evaluating the service quality through manual analysis, the embodiments of the present disclosure, without relying on manual experience, are able to automatically build a model with improved accuracy using machine learning methods.

After the training of the service quality evaluation model is completed, the trained service quality evaluation model may be deployed to online applications, and the method for evaluating service quality using the service quality evaluation model may be as follows.

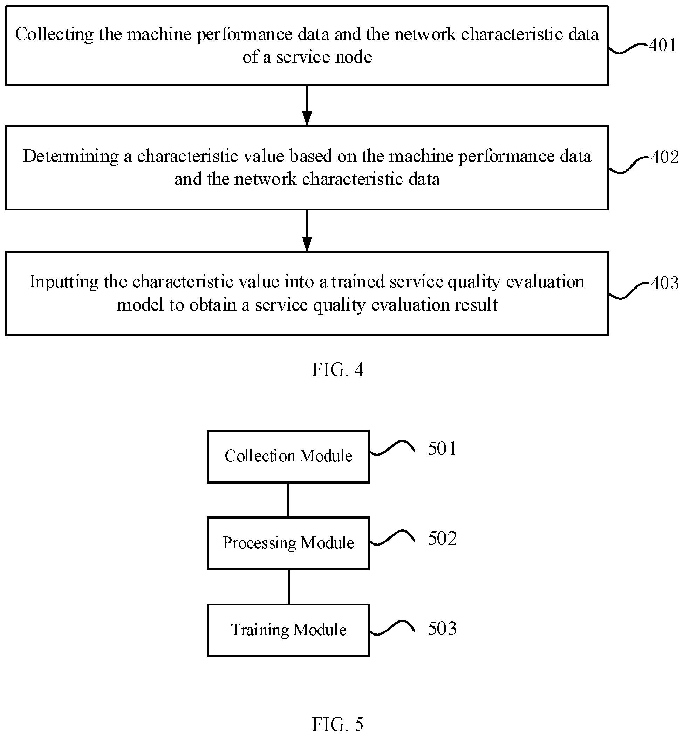

Referring to FIG. 4, a flowchart of a service quality evaluation method according to an embodiment of the present disclosure is illustrated. The method may be applied to quality evaluation node, that is, may be performed by quality evaluation node. The method may include the following steps.

In step 401, the machine performance data and the network characteristic data of a service node may be collected.

The quality evaluation node may collect the machine performance data and the network characteristic data in the service system whose service quality needs to be evaluated for service quality evaluation. When the quality evaluation node collects the raw data, the quality evaluation node may collect the data of a preset number of cycles according to a fixed cycle. The preset number of cycles may need to be not smaller than the number of time steps required for the sample. For example, when training a model, the training sample used includes data of 10 time steps, the preset number of cycles may thus need to be not smaller than 10.

In step 402, a characteristic value may be determined based on the machine performance data and the network characteristic data.

This step is similar to the calculation process of the characteristic value in the model training process described above, and the details are not repeated here.

In step 403, the characteristic value may be inputted into a trained service quality evaluation model to obtain a service quality evaluation result.

From the characteristic value obtained through calculation, the characteristic value of the preset number of time steps may be selected and inputted into the trained service quality evaluation model, and after the model calculation, a service quality evaluation result may be outputted. The number of the time steps of the characteristic value used for service quality evaluation may be equal to the number of time steps included in the training sample when training the model.

After the service quality evaluation model is deployed to online applications, test and training may be performed periodically to further optimize the model parameters and improve the accuracy of the model.

The embodiments of the present disclosure has the following beneficial effects.

(1) The embodiments of the present disclosure utilize machine performance data, network characteristic data, and quality monitoring data to train a model to lean a nonlinear relationship between machine performance data, network characteristic data, and service quality. When using the model to evaluate the service quality of a service system, only the machine performance data and the network characteristic data of the service system need to be inputted. Compared with the method of evaluating the service quality through the server access logs, the disclosed method is able to reduce the data input and greatly reduce the computing resources and bandwidth required for evaluation, and thus may not only improve the efficiency of the service quality evaluation, but also reduce the operating costs.

(2) Compared with the method of evaluating the service quality through the server access logs, the embodiments of the present disclosure use machine performance data and network characteristic data as model inputs, and these data are decoupled from specific services, such that a common set of service quality evaluation criteria can be formed, facilitating the management of the service system;

(3) Compared with the method of evaluating the service quality through manual analysis, the embodiments of the present disclosure, without relying on manual experience, are able to automatically build a model with improved accuracy using machine learning methods.

Referring to FIG. 5, a structural block diagram of a training apparatus for service quality evaluation models according to an embodiment of the present disclosure is illustrated. The apparatus may be disposed in the model training node or may be the model training node itself. The apparatus may specifically include a collection model 501, a processing module 502, and a training module 503, where:

the collection module may be configured to collect machine performance data, network characteristic data, and quality monitoring data of a service node according to a fixed cycle;

the processing module may be configured to determine a characteristic value based on the machine performance data and the network characteristic data;

the processing module may be further configured to determine a tag based on the quality monitoring data;

the processing module may be further configured to build a training set using the characteristic value and the tag; and

the training module may be configured to train a deep neural network model using the training set to obtain a service quality evaluation model.

Optionally, each of the service quality evaluation models may be applicable to a quality evaluation of a service type.

The collection module may be specifically configured to:

collect the quality monitoring data corresponding to one or more types of application services in the service node according to the fixed cycle, the one or more types of application services belonging to a service type to which the service quality evaluation model is applicable.

Optionally, the machine performance data may include a CPU utilization rate, a memory remaining amount, a load, an iowait value, and an ioutil value; and the network characteristic data may include ping data, poll data, and a downloading rate.

Optionally, the collection module may be specifically configured to:

collect the network characteristic data of the service node from the monitoring node according to the fixed cycle.

Optionally, the processing module may be further configured to:

delete data that have duplicate time stamps in the machine performance data, the characteristic feature data, and the quality monitoring data; and replace null values and abnormal values in the machine performance data, the characteristic feature data, and the quality monitoring data with normal values, or delete the null values and the abnormal values.

Optionally, the processing module may be specifically configured to:

filter the null values and the abnormal values in the machine performance data, the characteristic feature data, and the quality monitoring data in a manner to set a confidence interval after using a clustering algorithm or standardizing the data; and

replace the abnormal values with data collected using a k-NN algorithm or collected in an adjacent collection cycle.

Optionally, the characteristic value of the machine performance data may include one or more of a mean value, a maximum value, or a variance of the machine performance data of all dimensions; and the characteristic value of the network characteristic data includes at least one preset quantile value of the network characteristic data of all dimensions.

Optionally, the processing module may be specifically configured to:

determine an evaluation indicator of service quality based on the service type to which the service quality evaluation model is applicable; and calculate a value of the evaluation indicator using the quality monitoring data, and determining the value of the evaluation indicator as a tag.

Optionally, the deep neural network model may be an LSTM neural network model.

Optionally, the LSTM neural network model may include at least one layer of neural network. Each layer of neural network may include a forget gate, an input gate, an output gate, a neuron state, and an output result, each having a formula respectively:

$$f_t = \sigma_g(W_f x_t + U_f c_{t-1} + b_f);$$

$$i_t = \sigma_g(W_i x_t + U_i c_{t-1} + b_i);$$

$$o_t = \sigma_g(W_0 x_t + U_o c_{t-1} + b_o);$$

$$c_t = f_t \circ c_{t-1} + i_t \circ \sigma_c(W_c x_t + b_c);$$

$$h_t = o_t \circ \sigma_h(c_t);$$

where $f_t$ represents the forget gate; $i_t$ represents the input gate; $o_t$ represents the output gate; $c_t$ represents the neuron state; $h_t$ represents the output result; each of $\sigma_g$, $\sigma_c$, and $\sigma_h$ represents an activation function; $x_t$ represents the input data at time t; each of $W_f$, $W_i$, $W_o$, $W_c$, $U_f$, $U_i$, and $U_o$ represents a weight matrix, each of $b_f$, $b_i$, $b_o$, and $b_c$ represents an offset vector.

Optionally, when the LSTM neural network model includes multiple layers of neural network, the settings of a same parameter in different layers of the neural network may be different.

Optionally, when the LSTM neural network model includes multiple layers of neural network, the training module may be specifically configured to:

input the characteristic value of the training set into the first layer of neural network in the LSTM neural network model for propagation, and obtain an output result;
input the currently-obtained output result into the next layer of neural network for propagation, and obtain a new output result; when the next layer of neural network is the last layer of neural network, terminate the step, otherwise repeat the step;
determine an error between the output result of the last layer of neural network and the tag; and
reversely propagate the error to optimize the model parameters.

Optionally, the training set includes a plurality of training samples, and each of the plurality of training samples includes a tag and a characteristic value of n time steps, where n is a positive integer; and the training module is specifically configured to: sequentially input $x_t$ (t = 1, 2, ... , n) into the first layer of neural network in the LSTM neural network model with $x_t$ a matrix formed by the characteristic value of the t$^{th}$ time step in all training samples included in the training set, and obtain an output result $h_n$.

Optionally, the processing module may also be configured to build a verification set using the characteristic value and the tag; and accordingly, the training module may be configured to:

obtain an output result after inputting a characteristic value of the verification set into the trained model;
determine an error between the output result and a tag of the verification set; and
when the error does not meet the requirements, adjusting hyperparamters and retraining the adjusted model.

Optionally, the relationship between the input and the output results established by the service quality evaluation model is a nonlinear relationship.

Optionally, the model training node is a single server or a server group.

It should be noted that, when training a model, the training apparatus of the service quality evaluation model described above is only illustrated by the division of the above functional modules. In actual applications, according to needs, the above functions may be assigned to different functions for implementation. That is, the internal structure of the apparatus may be divided into different functional modules to implement all or part of the functions described above. In addition, the training apparatus of the service quality evaluation model provided by the above embodiments is based on the same concept as the embodiments of the training method of the service quality evaluation model, and the specific implementation process is described in detail in the method embodiments, which are not repeated here. Moreover, the training apparatus of the service quality evaluation model provided by the above embodiments has the same beneficial effects as the training method of the service quality evaluation model. The beneficial effects of the training apparatus embodiments of the service quality evaluation model may be referred to the beneficial effects of the training method embodiments of the service quality evaluation model, and the details are not repeated here either.

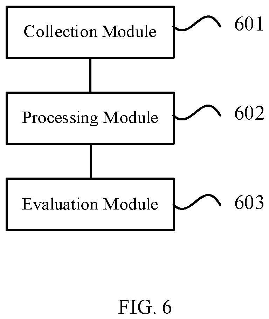

Referring to FIG. 6, a structural block diagram of a service quality evaluation apparatus according to an embodiment of the present disclosure is illustrated. The apparatus may be disposed in a quality evaluation node, or itself may be a quality evaluation node. The apparatus may specifically include a collection module 601, a processing module 602, and an evaluation module 603.

In the apparatus, the collection module 601 may be configured to collect machine performance data and network characteristic data for evaluating service quality; the processing module 602 may be configured to determine a characteristic value based on the machine performance data and the network characteristic data; and the evaluation module 603 may be configured to input the characteristic value into the trained service quality evaluation model to obtain quality data.

It should be noted that, when evaluating service quality, the service quality evaluation apparatus described above is only illustrated by the division of the above functional modules. In actual applications, according to needs, the above functions may be assigned to different functions for implementation. That is, the internal structure of the apparatus may be divided into different functional modules to implement all or part of the functions described above. In addition, the service quality evaluation apparatus provided by the above embodiments is based on the same concept as the embodiments of the service quality evaluation method, and the specific implementation process is described in detail in the method embodiments, which are not repeated here. Moreover, the service quality evaluation apparatus provided by the above embodiments has the same beneficial effects as the service quality evaluation method. The beneficial effects of the embodiments of the service quality evaluation apparatus may be referred to the beneficial effects of the embodiments of the service quality evaluation method, and the details are not repeated here either.

Those skilled in the art shall understand that the implementation of all or part of the steps of the above embodiments may be completed by hardware, or may be completed by using a program to instruct related hardware. The program may be stored in a computer readable storage medium. The storage medium mentioned above may be a read only memory, a magnetic disk or optical disk, etc.

The above are only the preferred embodiments of the present disclosure, and are not intended to limit the present disclosure. Any modifications, equivalents, improvements, etc., that are within the spirit and scope of the present disclosure, shall be included in the scope of protection of the present disclosure.

**Claims**

1. A training method for service quality evaluation models, applied to a model training node, the method comprising:

   collecting machine performance data, network characteristic data, and quality monitoring data of a service node according to a fixed cycle;
   determining a characteristic value based on the machine performance data and the network characteristic data;
   determining a tag based on the quality monitoring data;
   building a training set using the characteristic value and the tag; and
   training a deep neural network model using the training set to obtain a service quality evaluation model.

2. The method according to claim 1, wherein:

   each of the service quality evaluation models is applicable to a quality evaluation of a service type; and
   correspondingly, collecting the quality monitoring data of the service node according to the fixed cycle includes:
   collecting the quality monitoring data corresponding to one or more types of application services in the service node according to the fixed cycle, wherein the one or more types of application services belong to a service type to which the service quality evaluation model is applicable.

3. The method according to claim 1, wherein:
   the machine performance data include a central processing unit (CPU) utilization rate, a memory remaining amount, a load, an iowait value, and an ioutil value; and the network characteristic data include ping data, poll data, and a downloading rate.

4. The method according to claim 1, wherein the method further includes:

   the monitoring node periodically sending a detection signal to the service node, and obtaining the network characteristic data; and
   correspondingly, a step of collecting the network characteristic data of the service node according to the fixed cycle includes:
collecting the network characteristic data of the service node from the monitoring node according to the fixed cycle.

5. The method according to claim 1, prior to determining the characteristic value based on the machine performance data and the network characteristic data, further including:

deleting data that have duplicate time stamps in the machine performance data, the characteristic feature data, and the quality monitoring data; and
replacing null values and abnormal values in the machine performance data, the characteristic feature data, and the quality monitoring data with normal values, or deleting the null values and the abnormal values.

6. The method according to claim 5, wherein a step of replacing the abnormal values in the machine performance data, the characteristic feature data, and the quality monitoring data with the normal values includes:

filtering the null values and the abnormal values in the machine performance data, the characteristic feature data, and the quality monitoring data in a manner to set a confidence interval after using a clustering algorithm or data standardization; and
replacing the abnormal values with data collected using a k-NN algorithm or collected in an adjacent collection cycle.

7. The method according to claim 3, wherein:

the characteristic value of the machine performance data includes one or more of a mean value, a maximum value, or a variance of the machine performance data of all dimensions; and
the characteristic value of the network characteristic data includes at least one preset quantile value of the network characteristic data of all dimensions.

8. The method according to claim 1, wherein a step of determining the tag based on the quality monitoring data includes:

determining an evaluation indicator of service quality based on the service type to which the service quality evaluation model is applicable; and
calculating a value of the evaluation indicator using the quality monitoring data, and determining the value of the evaluation indicator as a tag.

9. The method according to any one of claim 1, wherein the deep neural network model is a long short-term memory (LSTM) neural network model.

10. The method according to claim 9, wherein:

the LSTM neural network model includes at least one layer of neural network, wherein each layer of neural network includes a forget gate, an input gate, an output gate, a neuron state, and an output result, each having a formula respectively:

$$f_t = \sigma_g(W_f x_t + U_f c_{t-1} + b_f);$$

$$i_t = \sigma_g(W_i x_t + U_i c_{t-1} + b_i);$$

$$o_t = \sigma_g(W_0 x_t + U_o c_{t-1} + b_o);$$

$$c_t = f_t \circ c_{t-1} + i_t \circ \sigma_c(W_c x_t + b_c);$$

$$h_t = o_t \circ \sigma_h(c_t);$$

where $f_t$ represents the forget gate; $i_t$ represents the input gate; $o_t$ represents the output gate; $c_t$ represents the neuron state; $h_t$ represents the output result; each of $\sigma_g$, $\sigma_c$, and $\sigma_h$ represents an activation function; $x_t$ represents the input data at time t; each of $W_f$, $W_i$, $W_o$, $W_c$, $U_f$, $U_t$, and $U_o$ represents a weight matrix, each of $b_f$, $b_i$, $b_o$, and $b_c$ represents an offset vector.

11. The method according to claim 10, wherein:
when the LSTM neural network model includes multiple layers of neural network, settings of a same parameter in different layers of the neural network are different.

12. The method according to claim 10, wherein:
when the LSTM neural network model includes multiple layers of neural network, a step of training the LSTM neural network model using the training set includes:

inputting the characteristic value of the training set into a first layer of neural network in the LSTM neural network model for propagation, and obtaining an output result;
inputting a currently-obtained output result into a next layer of neural network for propagation, and obtaining a new output result; when the next layer of neural network is a last layer of neural network, terminating this step, otherwise repeating this step;

determining an error between the output result of the last layer of neural network and the tag; and

reversely propagating the error to optimize model parameters.

13. The method according to claim 12, wherein:

the training set includes a plurality of training samples, and each of the plurality of training samples includes a tag and a characteristic value of $n$ time steps, where $n$ is a positive integer; and
a step of inputting the characteristic value of the training set into the first layer of neural network in the LSTM neural network model for propagation, and obtaining the output result includes: sequentially inputting $x_t$ (t = 1, 2, ... , $n$) into the first layer of neural network in the LSTM neural network model, wherein $x_t$ is a matrix formed by the characteristic value of a $t^{th}$ time step in all training samples included in the training set, and obtaining an output result $h_n$.

14. The method according to claim 1, wherein:

the method further includes building a verification set using the characteristic value and the tag; and
after a step of training the deep neural network model using the training set, the method includes:

importing a characteristic value of the verification set into a trained model to obtain an output result;
determining an error between the output result and a tag of the verification set; and
when the error does not meet requirements, adjusting hyperparamters and retraining the adjusted model.

15. The method according to claim 1, wherein:
a relationship between input and output results established by the service quality evaluation model is a nonlinear relationship.

16. The method according to claim 1, wherein:
the model training node is a single server or a server group.

17. A training apparatus for service quality evaluation models, comprising:

a collection module, configured to collect machine performance data, network characteristic data, and quality monitoring data of a service node according to a fixed cycle;

a processing module, configured to determine a characteristic value based on the machine performance data and the network characteristic data, wherein:

the processing module is further configured to determine a tag based on the quality monitoring data, and
the processing module is further configured to build a training set using the characteristic value and the tag; and

a training module, configured to train a deep neural network model using the training set to obtain a service quality evaluation model.

18. The apparatus according to claim 17, wherein:

each of the service quality evaluation models is applicable to a quality evaluation of a service type; and
the collection module is specifically configured to:
collect the quality monitoring data corresponding to one or more types of application services in the service node according to the fixed cycle, wherein the one or more types of application services belong to a service type to which the service quality evaluation model is applicable.

19. The apparatus according to claim 17, wherein:
the machine performance data include a CPU utilization rate, a memory remaining amount, a load, an iowait value, and an ioutil value; and the network characteristic data include ping data, poll data, and a downloading rate.

20. The apparatus according to claim 17, wherein the collection module is specifically configured to:
collect the network characteristic data of the service node from the monitoring node according to the fixed cycle.

21. The apparatus according to claim 17, wherein the processing module is further configured to:

delete data that have duplicate time stamps in the machine performance data, the characteristic feature data, and the quality monitoring data; and
replace null values and abnormal values in the machine performance data, the characteristic feature data, and the quality monitoring data with normal values, or delete the null values and the abnormal values.

22. The apparatus according to claim 21, wherein the processing module is specifically configured to:

filter the null values and the abnormal values in the machine performance data, the characteristic feature data, and the quality monitoring data in a manner to set a confidence interval after using a clustering algorithm or data standardization; and

replace the abnormal values with data collected using a k-NN algorithm or collected in an adjacent collection cycle.

23. The apparatus according to claim 19, wherein:

the characteristic value of the machine performance data includes one or more of a mean value, a maximum value, or a variance of the machine performance data of all dimensions; and

the characteristic value of the network characteristic data includes at least one preset quantile value of the network characteristic data of all dimensions.

24. The apparatus according to claim 17, wherein the processing module is specifically configured to:

determine an evaluation indicator of service quality based on the service type to which the service quality evaluation model is applicable; and

calculate a value of the evaluation indicator using the quality monitoring data, and determining the value of the evaluation indicator as a tag.

25. The apparatus according to claim 17, wherein: the deep neural network model is an LSTM neural network model.

26. The apparatus according to claim 25, wherein: the LSTM neural network model includes at least one layer of neural network, wherein each layer of neural network includes a forget gate, an input gate, an output gate, a neuron state, and an output result, each having a formula respectively:

$$f_t = \sigma_g(W_f x_t + U_f c_{t-1} + b_f);$$

$$i_t = \sigma_g(W_i x_t + U_i c_{t-1} + b_i);$$

$$o_t = \sigma_g(W_0 x_t + U_o c_{t-1} + b_o);$$

$$c_t = f_t \circ c_{t-1} + i_t \circ \sigma_c(W_c x_t + b_c);$$

$$h_t = o_t \circ \sigma_h(c_t);$$

where $f_t$ represents the forget gate; $i_t$ represents the input gate; $o_t$ represents the output gate; $c_t$ represents the neuron state; $h_t$ represents the output result; each of $\sigma_g$, $\sigma_c$, and $\sigma_h$ represents an activation function; $x_t$ represents the input data at time t; each of $W_f$, $W_i$, $W_o$, $W_c$, $U_f$, $U_i$, and $U_o$ represents a weight matrix, each of $b_f$, $b_i$, $b_o$, and $b_c$ represents an offset vector.

27. The apparatus according to claim 26, wherein: when the LSTM neural network model includes multiple layers of neural network, settings of a same parameter in different layers of the neural network are different.

28. The apparatus according to claim 26, wherein: when the LSTM neural network model includes multiple layers of neural network, the training module is specifically configured to:

input the characteristic value of the training set into a first layer of neural network in the LSTM neural network model for propagation, and obtain an output result;

input a currently-obtained output result into a next layer of neural network for propagation, and obtain a new output result; when the next layer of neural network is a last layer of neural network, terminate this step, otherwise repeat this step;

determine an error between the output result of the last layer of neural network and the tag; and

reversely propagate the error to optimize model parameters.

29. The apparatus according to claim 28, wherein:

the training set includes a plurality of training samples, and each of the plurality of training samples includes a tag and a characteristic value of n time steps, where n is a positive integer; and

the training module is specifically configured to: sequentially input $x_t$ (t = 1, 2, ... , n) into the first layer of neural network in the LSTM neural network model, wherein $x_t$ is a matrix formed by the characteristic value of a $t^{th}$ time step in all training samples included in the training set, and obtain an output result $h_n$.

FIG. 1

FIG. 2

Collecting the machine performance data, the network characteristic data, and the quality monitoring data of the service nodes according to a fixed period ⌐301

Determining a characteristic value based on the machine performance data and the network characteristic data ⌐302

Determining a tag based on the quality monitoring data ⌐303

Building a training set using the characteristic value and the tag ⌐304

Training a deep neural network model using the training set to obtain a service quality evaluation model ⌐305

FIG. 3

Collecting the machine performance data and the network characteristic data of a service node ⟋401

Determining a characteristic value based on the machine performance data and the network characteristic data ⟋402

Inputting the characteristic value into a trained service quality evaluation model to obtain a service quality evaluation result ⟋403

FIG. 4

Collection Module    501

Processing Module    502

Training Module    503

FIG. 5

Collection Module — 601

Processing Module — 602

Evaluation Module — 603

FIG. 6

## INTERNATIONAL SEARCH REPORT

| International application No. |
| --- |
| **PCT/CN2018/113031** |

| | |
| --- | --- |
| **A.** | **CLASSIFICATION OF SUBJECT MATTER** |
| | H04L 12/24(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

    H04L

Documentation searched other than minimum documentation to the extent that such documents are included in the fields searched

Electronic data base consulted during the international search (name of data base and, where practicable, search terms used)

    CNABS, DWPI, SIPOABS, CNKI: 服务, 质量, 评估, 模型, 采集, 节点, 周期, 性能, 网络, 特征, 监控, 标签, 训练, 神经网络; service, quality, assessment, evaluation, model, collect, node, period, cycle, performance, network, feature, characteristic, monitor, label, train, neural network

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | CN 102647299 A (WANGSU SCIENCE AND TECHNOLOGY CO., LTD .) 22 August 2012 (2012-08-22)<br>    description, paragraphs [0031]-[0049] | 1-9, 14-25 |
| Y | CN 106651830 A (SOUTH CHINA UNIVERSITY OF TECHNOLOGY) 10 May 2017 (2017-05-10)<br>    description, paragraphs [0007]-[0041] | 1-9, 14-25 |
| A | CN 105897736 A (BEIJING UNIVERSITY OF POSTS AND TELECOMMUNICATIONS) 24 August 2016 (2016-08-24)<br>    entire document | 1-29 |
| A | CN 104038392 A (YUNNAN POWER GRID CORPORATION ET AL.) 10 September 2014 (2014-09-10)<br>    entire document | 1-29 |
| A | CN 106131865 A (NSPUR SOFTWARE GROUP CO., LTD.) 16 November 2016 (2016-11-16)<br>    entire document | 1-29 |

| ☐ Further documents are listed in the continuation of Box C. | ☑ See patent family annex. |
| --- | --- |

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **09 July 2019** | **24 July 2019** |

| Name and mailing address of the ISA/CN | Authorized officer |
| --- | --- |
| **National Intellectual Property Administration, PRC (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/113031**

| Patent document cited in search report | | | Publication date (day/month/year) | Patent family member(s) | | | Publication date (day/month/year) |
|---|---|---|---|---|---|---|---|
| CN | 102647299 | A | 22 August 2012 | CN | 102647299 | B | 15 October 2014 |
| CN | 106651830 | A | 10 May 2017 | None | | | |
| CN | 105897736 | A | 24 August 2016 | None | | | |
| CN | 104038392 | A | 10 September 2014 | None | | | |
| CN | 106131865 | A | 16 November 2016 | None | | | |

Form PCT/ISA/210 (patent family annex) (January 2015)